# EUROPÄISCHE PATENTSCHRIFT

(11) **EP 1 814 723 B1**
(45) Veröffentlichungstag und Bekanntmachung des Hinweises auf die Patenterteilung: **22.07.2015**
(21) Anmeldenummer: 05816454.2
(22) Anmeldetag: 10.11.2005
(51) Int. Cl.: B42D 25/24

(54) **EINLAGEBLATT, INSBESONDERE FÜR EIN BUCHARTIGES IDENTIFIKATIONSDOKUMENT, VERFAHREN UND VORRICHTUNG ZUR HERSTELLUNG EINES EINLAGEBLATTES**
INTERLEAF, IN PARTICULAR FOR A BOOK-LIKE IDENTITY DOCUMENT, PROCESS AND DEVICE FOR PRODUCING AN INTERLEAF
FEUILLE INTERCALAIRE, EN PARTICULIER POUR UN DOCUMENT D'IDENTIFICATION DU TYPE LIVRE, PROCEDE ET DISPOSITIF POUR FABRIQUER UNE FEUILLE INTERCALAIRE

(30) Priorität: 19.11.2004 DE 102004055973
(43) Veröffentlichungstag der Anmeldung: 08.08.2007
(73) Patentinhaber: Bundesdruckerei GmbH, 10969 Berlin (DE)
(72) Erfinder: HAHN, Enrico, 76351 Linkenheim-Hochstetten (DE); SENGE, Carsten, 24105 Kiel (DE)
(74) Vertreter: Maser, Jochen
(86) Internationale Anmeldenummer: PCT/EP2005/012076
(87) Internationale Veröffentlichungsnummer: WO 2006/053679

(56) Entgegenhaltungen:
- EP-A- 1 008 459
- EP-A- 1 380 442
- EP-A- 1 516 749
- US-A- 5 865 919
- US-A- 6 135 503
- US-B1- 6 607 810

## Beschreibung

Die Erfindung geht aus von einem Einlageblatt, insbesondere für ein buchartiges Identifikationsdokument, einem Verfahren und einer Vorrichtung zur Herstellung eines Einlageblattes, insbesondere für ein Identifikationsdokument, gemäß dem Oberbegriff der unabhängigen Ansprüche.

Unter Identifikationsdokumenten werden beispielsweise Pässe, buchartige Personalausweise, Führerscheine, vorläufige Personaldokumente oder dergleichen, verstanden. Im allgemeinen bestehen diese aus einem Kunststoff-, Papp- oder Leinenumschlag und Datenseiten aus Papier und/oder Kunststoff. Die Datenseiten werden mittels einer Naht am Vorsatz oder an der inneren Umschlagseite befestigt. Die Datenseiten weisen eine Personalisierdatenseite auf, auf der die wichtigsten Personendaten und das Bild des Inhabers des Identifikationsdokumentes angeordnet sind. Weitere Datenseiten können Eintragungen zum Inhaber oder freie Bereiche für spätere Eintragungen, wie beispielsweise Visa, enthalten. Die Datenseiten können aus unterschiedlichen Materialien bestehen und eine unterschiedliche Dicke aufweisen.

Aus der EP 0 430 282 A1 sind bereits mehrschichtige Ausweiskarten bekannt, die Zwischenschichten aus thermoplastischem Elastomer, wie beispielsweise aus thermoplastischem Polyurethan, enthalten und beispielsweise von PC-, PET- oder ABS-Schichten umgeben sind. Diese durchgängig übereinander angeordneten Schichten weisen den Nachteil auf, dass sie keine befriedigenden Biegeeigenschaften aufweisen. Durch mehrfaches Biegen im Nahtbereich entstehen in den laminierten Seiten Risse, die zum vollständigen Bruch führen können.

Aus der EP 1 380 442 A1 geht ein Verfahren zur Herstellung eines Einlageblattes sowie ein Einlageblatt hervor, welches aus mehreren übereinander angeordneten Schichten aufgebaut ist. Gemäß einer ersten Ausführungsform ist vorgesehen, dass sich alle Schichten der Personalisierungsdatenseite über die gesamte Breite vollständig erstrecken. Dies führt dazu, dass ein sehr dicker Faltbereich im Nahtbereich ausgebildet ist. Dadurch wird das Biegen der Lasche zur Personalisierdatenseite erschwert. In einer zweiten Ausführungsform ist vorgesehen, dass eine zentrale Lage sich über die gesamte Breite der Personalisierdatenseite sowie über die Naht hinaus zur Bildung der Lasche erstreckt. Außerhalb der Lasche und des Faltbereichs sind weitere Schichten aufgebracht, die sich über die Personalisierdatenseite erstrecken, wobei ein stufenförmiger Übergang zwischen den weiteren Schichten zur zentralen Schicht gegeben ist, welche sich in den Nahtbereich bis zur Lasche erstreckt. Dadurch wird zwar der Nahtbereich erheblich verjüngt, jedoch ist aufgrund des stufenartigen Überganges im Bereich der Stufe eine erhöhte Bruchgefahr gegeben.

Aus der EP 1 008 459 B2 geht eine Anordnung zur Aussteifung des Nahtbereiches hervor, bei dem zunächst eine Reduzierung der Dicke der Laminatschichten nahe dem Nahtbereich vorgesehen ist. Die Lasche, die an der Reduzierung nahe dem Nahtbereich befestigt ist, wird über ein Verschlusselement zu den Laminatschichten der Personalisierdatenseite gehalten. Dadurch wird mittels einer Klemmung eine Lasche aus flexiblerem Material und eine Personalisierdatenseite mit Laminatschichtumhüllung miteinander verbunden. Diese Druckschrift weist den Nachteil auf, dass die Herstellung sehr aufwändig ist und dass im Übergangsbereich zwischen der Lasche und der Laminatschichtumhüllung der Personalisierdatenseite wiederum eine Bruchgefahr besteht.

Der Erfindung liegt deshalb die Aufgabe zugrunde, einen Faltbereich für ein Einlageblatt zu schaffen, welches zufriedenstellende Biegeeigenschaften aufweist.

Diese Aufgabe wird durch das erfindungsgemäße Einlageblatt, die erfindungsgemäße Vorrichtung und das erfindungsgemäße Verfahren zur Herstellung des Einlageblattes gelöst. Weitere vorteilhafte Ausführungsformen und Weiterbildungen sind auf die jeweils unabhängigen Ansprüche zurückbezogenen Ansprüche vorgesehen.

Das erfindungsgemäße Einlageblatt weist den Vorteil auf, dass alle Schichten des Einlageblattes fest miteinander verbunden sind und ein fließender Übergangsbereich zwischen dem Faltbereich und der zumindest einen weiteren Schicht gegeben ist, die auf mindestens einer Schicht aus einem thermoplastischem Elastomer aufgebracht ist. Durch die vorzugsweise auf einer Oberseite und einer Unterseite vorgesehenen fließenden Übergänge werden gute Biegeeigenschaften erzielt und die Rissbildung im Naht- oder Faltbereich vermieden, die zu Brüchen und im schlechtesten Fall zum Lösen von einer Personalisierdatenseite oder weiteren Datenseiten aus einem Identifikationsdokument führen.

Des Weiteren weist die erfindungsgemäße Ausgestaltung des Einlageblattes den Vorteil auf, dass der Faltbereich, der zur Aufnahme der Naht vorgesehen ist, eine geringe Gesamtdicke aufweist, wodurch verbesserte Biegeeigenschaften gegeben sind. Die mindestens eine Schicht aus thermoplastischem Elastomer weist im Faltbereich eine konstante Dicke oder eine geringere Dicke als in übrigen Bereichen auf, um die Biegeeigenschaften zu verbessern. Zusätzlich ist ein einfacher Aufbau und eine einfache Ausgestaltung der Schichten zur Herstellung eines Einlageblattes gegeben.

Nach einer vorteilhaften Ausführungsform für das Einlageblatt ist vorgesehen, dass auf einer Seite der zumindest einen Schicht aus thermoplastischem Elastomer mindestens zwei weitere Schichten angeordnet sind, die jeweils eine im Wesentlichen parallel zur Naht verlaufende Nahtseitenkante aufweisen, wobei die Nahtseitenkante der unmittelbar an die Schicht aus thermoplastischem Elastomer angrenzenden ersten weiteren Schicht sich weniger weit bis zum Faltbereich erstreckt als die mindestens eine weitere Schicht. Dadurch wird ermöglicht, dass die mindestens eine weitere Schicht die unmittelbar auf der Schicht aus thermoplastischem Elastomer aufliegende erste weitere Schicht überdeckt und der Faltbereich mit einem reduzierten Querschnitt ausgebildet wird. Gleichzeitig ist ein vollständiger Schutz der zumindest ersten weiteren Schicht gegeben.

Der Faltbereich ist nach einer vorteilhaften Ausgestaltung der Erfindung durch einen Übergangsbereich ausgebildet, der sich zwischen einer Nahtseitenkante der ersten weiteren Schicht und der Nahtseitenkante der diese Schicht überdeckenden zumindest zweiten weiteren Schicht bildet, der stufenförmig, gerundet, wellenförmig, segmentförmig mit gleichen oder unterschiedlichen Stufungen und/oder Verläufen vorgesehen ist. Dadurch können in Abhängigkeit der verwendeten Materialien der weiteren Schichten sowie deren Dicken oder Abstand der Nahtseitenkante unterschiedliche Übergangsbereiche ausgebildet werden, die sehr gute Biegeeigenschaften aufweisen und eine Rissbildung vermeiden.

Nach einer weiteren vorteilhaften Ausgestaltung der Erfindung ist vorgesehen, dass sich die zumindest eine weitere Schicht vollständig über den Faltbereich erstreckt und auf der aus thermoplastischem Elastomer ausgebildeten Schicht aufliegt oder eingepresst ist. Dadurch kann ebenfalls ein fließender Übergangsbereich zwischen dem Faltbereich der zumindest einen weiteren Schicht gegeben sein, die auf mindestens einer aus einem thermoplastischen Elastomer ausgebildeten Schicht aufgebracht ist. Bevorzugt ist vorgesehen, dass die zumindest eine weitere Schicht, welche auf der aus thermoplastischen Elastomer ausgebildeten Schicht aufgebracht ist, im Nahtbereich zumindest teilweise, insbesondere vollständig, eingepresst wird, so dass die ursprüngliche Dicke der Schicht aus thermoplastischen Elastomer im Nahtbereich erhalten bleibt, um eine leichte Biegung und ein einfaches Einnähen zu ermöglichen.

Nach einer weiteren vorteilhaften Ausgestaltung des Einlageblattes ist vorgesehen, dass im Faltbereich die zumindest eine weitere Schicht und/oder die mindestens eine Schicht aus thermoplastischem Elastomer eine Einprägung aufweisen. Dadurch kann der Faltbereich mit einem oder mehreren Sicherheitsmerkmalen versehen sein, wodurch eine Manipulation durch Ablösen der zumindest einen weiteren Schicht von der zumindest einen Schicht aus thermoplastischem Elastomer sichtbar wird.

Das erfindungsgemäße Einlageblatt ist als Datenseite ausgebildet, das personalisiert wird. Dabei können Bilddaten, Buchstaben und Ziffern sowie Codierungen, Barcodes oder dergleichen eingebracht werden. Das Einlageblatt kann zusätzlich verschiedene Sicherheitsmerkmale, wie Kippbilder oder Hologramme, aufweisen und in den Formaten ID-1, ID-2, ID-3 oder weiteren Formaten vorgesehen sein sowie weitere Sicherheitsmerkmale aufweisen.

Durch das erfindungsgemäße Verfahren zur Herstellung eines Einlageblattes, insbesondere für ein buchartiges Identifikationsdokumentes, wird eine einfache und kostengünstige Herstellung des Einlageblattes ermöglicht. Die einzelnen Schichten zur Herstellung eines Einlageblattes werden in einem Laminiervorgang miteinander verbunden. Dabei wird gleichzeitig ein fließender Übergang von der zumindest einen weiteren Schicht zur zumindest einen Schicht aus thermoplastischem Elastomer im Faltbereich ermöglicht. Dadurch kann ohne Nacharbelt eine biegeelastische Ausgestaltung des Faltbereiches hergestellt werden. Darüber hinaus ist eine Vorbearbeitung der zumindest einen Schicht aus thermoplastischem Elastomer sowie der zumindest einen weiteren Schicht nicht erforderlich.

Die zumindest eine weitere Schicht, die auf der zumindest einen Schicht aus thermoplastischem Elastomer oberhalb oder unterhalb vorgesehen ist, wird durch eine Pressung während dem Verheften oder Laminieren der Schichten auf der zumindest einen Schicht aus thermoplastischem Elastomer aufliegend verbunden oder zumindest teilweise in die Schicht aus thermoplastischem Elastomer eingedrückt oder eingepresst. Dadurch kann ein bündiger oder fließender Übergang mit einer absatzfreien Oberfläche geschaffen werden.

Vorteilhafterweise wird der Übergangsbereich zwischen der zumindest einen weiteren Schicht und der Schicht aus thermoplastischem Elastomer gebildet wird, zumindest teilweise miteinander verklebt, verschmolzen oder verschweißt, so dass eine zumindest teilweise stoffschlüssige Verbindung geschaffen wird.

Des Weiteren ist nach einer alternativen Ausführungsform der Erfindung vorgesehen, dass während dem Laminieren der zumindest einen weiteren Schicht zur mindestens einen Schicht aus thermoplastischem Elastomer der Faltbereich derart verformt wird, dass ein absatzfreier Übergang geschaffen wird. Dadurch kann zusätzlich zum Faltbereich auch der sich außen daran anschließende Bereich verformt und umgestaltet werden.

Zur Durchführung des erfindungsgemäßen Verfahrens und Herstellung eines Einlageblattes, insbesondere für ein buchartiges Identifikationsdokument, ist erfindungsgemäß eine Laminierform vorgesehen, die zumindest einen Stempel aufweist, der gegenüber der Laminierform erhöht ist und beim Laminieren der Schichten im Faltbereich die zumindest eine weitere Schicht absatzfrei zur mindestens einen Schicht aus thermoplastischem Elastomer positioniert. Dieser Stempel ermöglicht die Ausgestaltung des Faltbereiches mit sehr guten Biegeeigenschaften. Die Schichten können durch die Laminierform mit zumindest einem Stempel während eines Arbeitsganges eingebracht werden.

Vorteilhafterweise ist vorgesehen, dass der Stempel als Metallstreifen ausgebildet ist, der an der Laminierform durch Kleben, Löten, Schweißen, Heften, Krimpen, Nieten oder einer Magnethaltekraft vorgesehen ist. Dadurch ist eine kostengünstige Herstellung einer Laminierform gegeben, deren Einsatz variabel auf unterschiedliche Faltbereiche und Geometrien der Faltbereiche anpassbar ist. Alternativ können auch im Kunststoffspritzverfahren Stempel ausgebildet werden, wie beispielsweise aus Teflon, PEEK, PET, PE oder aus artverwandten Kunststoffen, die mit und ohne Gewebeeinlagen vorgesehen sein. Des Weiteren können keramische Materialien, verbundkeramische Materialien oder silikonhaltige Materialien verwendet werden. Darüber hinaus kann der Stempel durch galvanischen Aufbau, spanabhebende Verfahren oder dergleichen hergestellt werden. Des Weiteren kann der Stempel eine oberflächenveredelte Schicht umfassen, weiche als Schutz- und/oder Antihaftschicht ausgebildet ist. Beispielsweise können Kunststoffe wie Teflon oder andere Materialien eingesetzt werden.

Der Querschnitt des Stempels ist vorteilhafterweise an die gewünschte Geometrie des Faltbereiches angepasst, so dass während der Herstellung des Faltbereiches durch die Stempel die Geometrie auf dem Faltbereich abgebildet wird. Der Stempel ist bevorzugt aus Federbandstahl oder Blechstahl ausgebildet und kann unterschiedliche Dicken im µ-Bereich umfassen. Ebenso kann der Stempel sowohl in der Breite, Dicke und/oder Länge mehrteilig ausgebildet sein.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung eines Identifikationsdokumentes mit einem erfindungsgemäßen Einlageblatt,
- Figur 2: eine schematische Draufsicht auf das Identifikationsdokument gemäß Figur 1,
- Figur 3a: eine schematische Schnittdarstellung eines ersten Schrittes des erfindungsgemäßen Verfahrens zur Herstellung eines Einlageblattes,
- Figur 3b: eine schematische Schnittdarstellung eines erfindungsgemäßen Einlageblattes nach der Durchführung des Verfahrens,
- Figur 3c - e: schematische Schnittdarstellungen alternativer Ausführungsformen eines erfindungsgemäßen Einlageblattes nach Durchführung des Verfahrens,
- Figur 4a: eine schematische Schnittdarstellung eines Ausschnittes einer erfindungsgemäßen Laminierform,
- Figur 4b: eine schematische Schnittdarstellung einer alternativen Ausführungsform zu Figur 4a,
- Figur 4c: eine schematische Schnittdarstellung einer weiteren alternativen Ausführungsform zu Figur 4a und
- Figur 5: eine schematische Draufsicht auf eine erfindungsgemäße Laminierform mit einem Stempel.

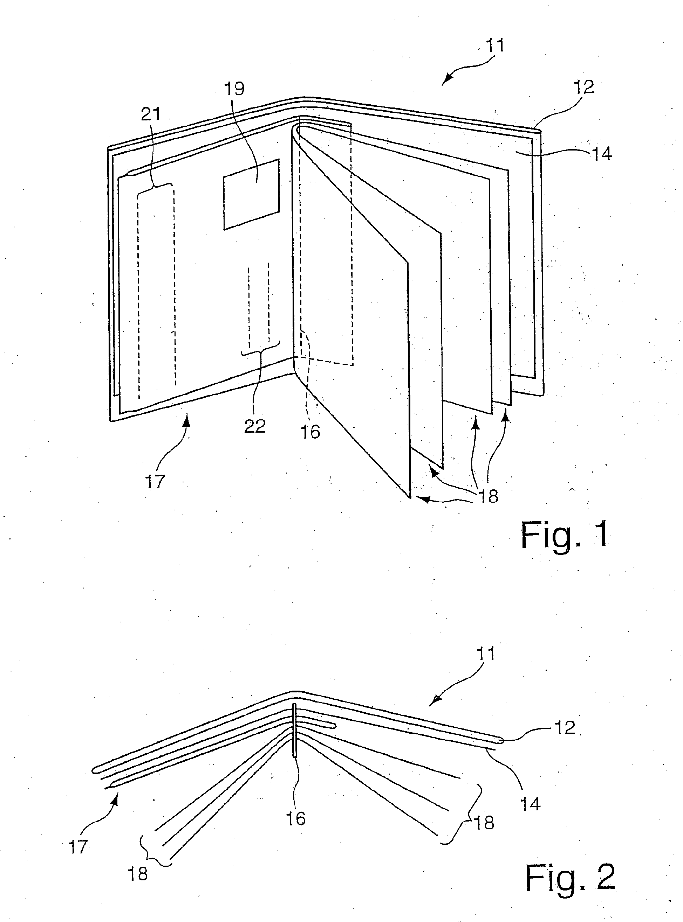

In den Figuren 1 und 2 ist ein Identifikationsdokument 11 dargestellt, wie beispielsweise ein Reisepass. Das Identifikationsdokument 11 umfasst einen Bucheinband 12, wie beispielsweise einen Buchdeckel eines Buches. Auf einer Innenseite ist ein Vorsatz 14 vorgesehen, der am Bucheinband 12 befestigt ist. Über eine gemeinsame Naht 16 sind ein Einlageblatt 17 und mehrere Datenseiten 18 mit einem Vorsatz 14 verbunden. Die Datenseiten 18 sind beispielsweise Innenseiten des buchartigen Identifikationsdokumentes 11 und dienen der Aufnahme von Visa oder sonstigen Stempeln.

Das Einlageblatt 17 ist als Personalisierdatenseite ausgebildet. Eine Personalisierdatenseite kann beispielsweise gemäß ICAO-Standard ausgebildet sein und umfasst ein Foto 19 des Dokumenteninhabers, eine OCRmaschinenlesbare ICAO-Zeile 21 und weitere Personalisierdaten 22.

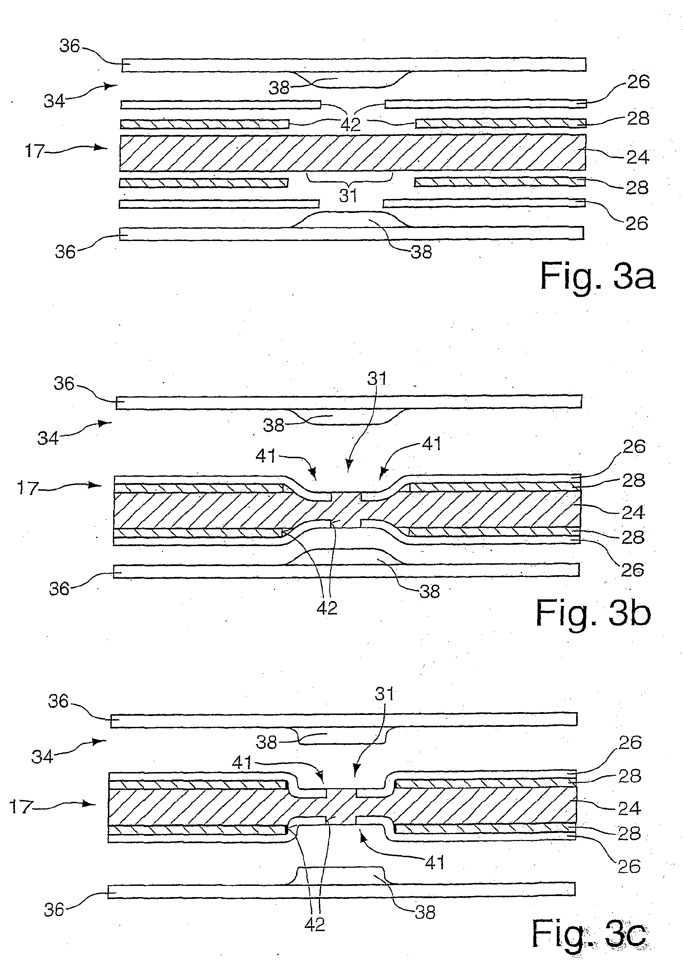

In Figur 3a ist eine schematische Schnittdarstellung einer ersten erfindungsgemäßen Ausführungsform eines Einlageblattes 17 dargestellt. Das Einlageblatt 17 umfasst eine Schicht aus thermoplastischem Elastomer als mittlere Schicht sowie oberhalb und unterhalb der Schicht 24 zumindest eine weitere Schicht 26. Dazwischenliegend ist beispielsweise zumindest eine erste weitere Schicht 28 vorgesehen. Die weiteren Schichten 26, 28 bestehen bevorzugt aus hochtemperaturstabilem Kunststoff. Die mittlere Schicht 24 ist im Querschnitt konstant ausgebildet. Die zumindest erste weitere Schicht 28 erstreckt sich mit einer Nahtseitenkante 42 bis zu einem Faltbereich 31, der sich links und rechts der Naht 16 erstreckt. Die zumindest eine weitere Schicht 26 erstreckt sich über die zumindest erste weitere Schicht 28 in den Faltbereich 31 hinein. Die zur Naht weisenden Kanten 42 der Schicht 26 sind mit Abstand zueinander angeordnet, so dass ein mittlerer freier Bereich ausgebildet ist, in dem die Naht 16 in die zumindest eine Schicht 24 aus thermoplastischem Elastomer eingebracht ist.

Als thermoplastisches Elastomer kann vorzugsweise thermoplastisches Polyurethan (TPU) angewendet werden. Es können jedoch auch weitere thermoplastische Elastomere eingesetzt werden. Hierfür stehen die gesamte Gruppe der thermoplastischen Polyurethane, die Gruppe der thermoplastischen Copolyesther und die Gruppe der thermoplastischen Polyether-Block-Amide zur Verfügung. Als hochtemperaturstablie Kunststoffe können beispielsweise Polycarbonat (PC), Polyethersulfon (PES), Polyetherketon (PEEK), Polyphenylenoxid (PPO), Polyphenylensulfid (PPS), Polyethylentherephtalat (PET), Polybutylentherephtalat (PBT), Polyoxymethylen (POM), Polysulfon (PSU), Polyetherimid (PEI) oder Polyamid (PA) angewendet werden. Diese hochtemperaturstabilen Kunststoffe können einzeln oder in Kombination als weitere Schicht 26, 28 angewendet werden.

In der zumindest einen Schicht 24 aus thermoplastischem Elastomer kann beispielsweise eine Transpondereinheit aufgebracht oder eingebettet sein, wobei die Schichtdicke der Schicht 24 in Abhängigkeit der Einsatzfälle angepasst ist. Vorteilhafterweise weist die mindestens eine Schicht 24 aus dem thermoplastischen Elastomer im Faltbereich 31 eine Schichtdicke zwischen 100 µm und 500 µm auf. Die weiteren Schichten 26, 28 aus hochtemperaturstabilem Kunststoff können Schichtdicken zwischen 20 µm und 500 µm aufweisen. Zumindest eine der Schichten 24, 26, 28 kann weitere Sicherheitsmerkmale, wie beispielsweise ein Sicherheitsdruck, eine Prägung, optical variable devices (Hologramme) oder dergleichen aufweisen.

Zur Herstellung wird das Einlageblatt 17, das als Ein- oder Mehrfachnutzen hergestellt werden kann und aus den einzelnen Schichten 24, 26 und 28 besteht, in einer schematisch dargestellten Vorrichtung 34, beispielsweise einer beheizbaren Presse, auf eine untere Laminatform 36 aufgelegt. Eine obere Laminatform 36 wird auf die untere Laminatform 36 zugeführt und durch Druck und Hitze werden die einzelnen Laminatschichten 24, 26, 28 geheftet beziehungsweise miteinander verbunden.

In Figur 3b ist eine erste Ausführungsform eines fertig hergestellten Einlageblattes 17 mit den von dem Einlageblatt 17 abgehobenen Laminatformen 36 dargestellt. Die zumindest eine weitere Schicht 26 aus hochtemperaturstabilem Kunststoff ist im Faltbereich 31 bündig mit seiner äußeren Oberfläche zur äußeren Oberfläche des Faltbereiches 31 angeordnet. Die weitere Schicht 26 ist in die zumindest eine Schicht 24 aus thermoplastischem Elastomer eingepresst. Dadurch kann ein fließender Übergang von der weiteren Schicht 26 zur einen Schicht 24 geschaffen werden, wodurch eine stabile und rissbildungsfreie Anordnung geschaffen ist. Ein Übergangsbereich 41, der sich zwischen eingedrückten oder eingepressten Nahtseitenkanten 42 der zumindest einen weiteren Schicht 26 und der ersten weiteren Schicht 28 erstreckt, ist gemäß einer ersten Ausführungsform gerundet oder einer S-Form angenähert ausgebildet. Durch die fließenden Übergänge kann eine stabile und leicht faltbare Anordnung vorgesehen sein.

In einer nicht näher dargestellten Ausführungsform kann vorgesehen sein, dass die zumindest eine Schicht 24 aus thermoplastischem Elastomer im Faltbereich 31 verjüngt ausgebildet ist oder entsprechende Vertiefungen zur Aufnahme der zumindest einen weiteren Schicht 26 umfasst.

In Figur 3c ist eine alternative Ausführungsform eines Übergangsbereiches 41 eines Einlageblattes 17 im Vergleich zu Figur 3b dargestellt. Der Übergangsbereich 41 ist gestuft ausgebildet. Diese Ausführungsform kann bevorzugt bei einer im Verhältnis zur weiteren Schicht zumindest einen ersten weiteren Schicht 28 dick ausgebildet sein. Diese gestufte Anordnung ermöglicht ebenfalls eine geschlossene Anordnung für eine Laminatschichtumhüllung.

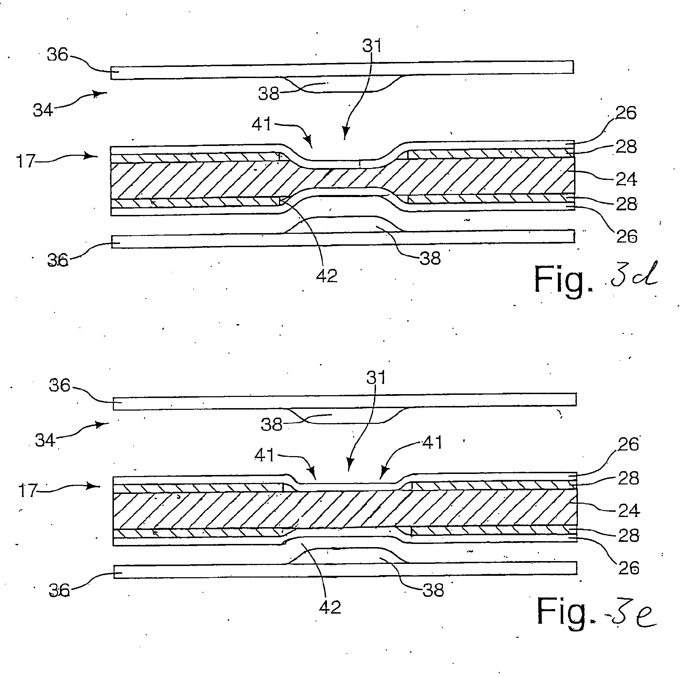

In Figur 3d ist eine alternative Ausführungsform zu den Figuren 3b und c dargestellt. Bei dieser Ausführungsform ist vorteilhafterweise vorgesehen, dass die Schicht 26 durchgehend ausgebildet ist und sich vollständig über den Faltbereich 31 erstreckt. Bei dieser Ausführungsform ist in Analogie zu Figur 3b und c vorgesehen, dass die Schicht 26 vollständig in die aus thermoplastischem Elastomer ausgebildete Schicht 24 eingepresst ist.

In Figur 3e ist eine alternative Ausführungsform zu Figur 3d dargestellt. Bei dieser Ausführungsform ist die Schicht 26 im Faltbereich 31 auf der Schicht 24 aufliegend befestigt. Diese Ausführungsform kann beispielsweise von Vorteil sein, sofern ein verstärkter und geringfügig versteifter Faltbereich 31 auszubilden ist.

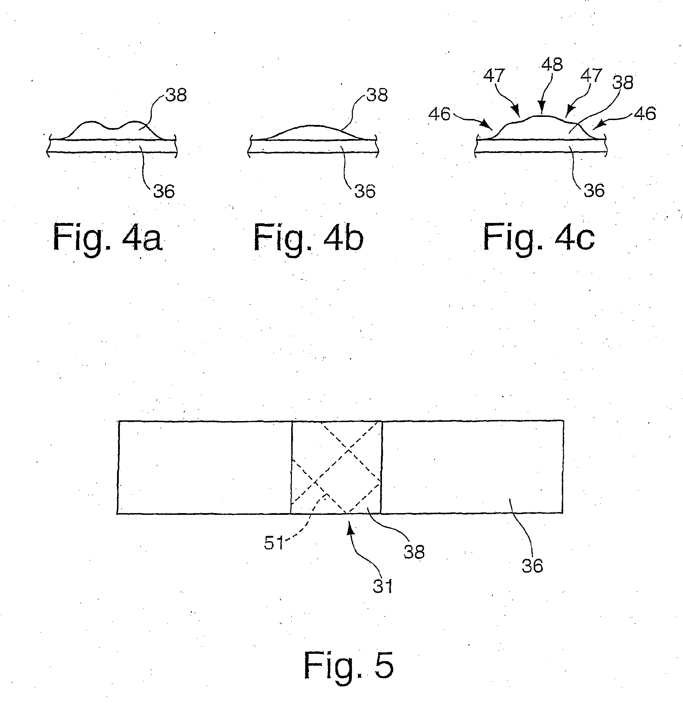

Die Übergangsbereiche 41 in den Figuren 3d und e können durch Laminatformen hergestellt werden, wie diese beispielsweise zu den Figuren 3a bis c beschrieben sind oder in den nachfolgenden Figuren 4 und 5 beschrieben werden.

Weitere alternative Ausführungsformen des Übergangsbereiches können vorgesehen sein und werden durch die Querschnittsgeometrie von auf der Laminatform 36 angeordneten Stempeln 38 bestimmt.

Die Laminatform 36 ist beispielsweise aus Blech oder dergleichen ausgebildet und nimmt den Stempel 38 durch eine feste Verbindung, wie beispielsweise durch Schweißen, Löten, Kleben, Nieten, Verkrimpen oder durch eine lösbare Verbindung, wie beispielsweise Magnetisierung, Verrasterung, auf. Der Stempel 38 ist in seiner Querschnittsgeometrie an die Ausgestaltungsform des Faltbereiches 31 angepasst. Der Stempel gemäß Figur 3a umfasst gerundete Kanten, wodurch weiche und fließende Übergänge geschaffen sind. Die Ausführungsform des Stempels 38 gemäß Figur 3c ist stufig ausgebildet, wodurch ein stufiger Übergangsbereich 41 des Faltbereiches 31 geschaffen ist.

In den Figuren 4a bis 4c sind weitere alternative Querschnittsgeometrien für einen Stempel 38 beispielhaft dargestellt. In Figur 4a umfasst der Stempel 38 eine Wellenform. Dadurch wird beispielsweise ermöglicht, dass der mittlere Bereich des Faltbereiches 31, in dem die Naht 16 vorgesehen ist, verdickt ausgebildet ist. Durch die alternative Ausführungsform gemäß Figur 4b, bei der der Stempel 38 einen konvexen Verlauf aufweist, wird ein verjüngter Faltbereich 31 hergestellt. In Figur 4c ist eine weitere alternative Ausführungsform eines Stempels 38 vorgesehen, der beispielsweise einen ersten gerundeten Segmentabschnitt 46 umfasst, der zuerst in einen geradlinigen Segmentabschnitt 47 mit einer geringen Steigung übergeht und anschließend in einen horizontal verlaufenden Segmentabschnitt 48 mündet. Bevorzugt ist der Stempel 38 spiegelsymmetrisch ausgebildet, so dass links und rechts der Naht 16 dieselben Segmentabschnitt 46, 47, 48 vorgesehen sind.

In Figur 5 ist eine schematische Draufsicht auf eine Laminatform 36 mit einem Stempel 38 vorgesehen. Auf dem Stempel 38 ist eine Einprägung oder Erhöhung 51 vorgesehen. Diese Einprägung oder Erhöhung 51 wird während dem Heften der einzelnen Schichten 24, 26, 28 auf den Faltbereich 31 aufgebracht und dient als weiteres Sicherheitsmerkmal. Des Weiteren können über den Stempel 38 zusätzlich aus thermoplastischem Elastomer bestehende Einlegeteile als Sicherheitsmerkmal eingebracht werden. Die Ausgestaltung der Nahtseitenkanten 42 ist bevorzugt geradlinig verlaufend und parallel zur Naht 46 vorgesehen. Weitere Verläufe, wie zick-zack-förmig, wellenförmig oder dergleichen sowie ein nicht paralleler Verlauf zur Naht 16, sind ebenfalls vorgesehen.

Sämtliche in den Ausführungsbeispielen beschriebenen Merkmale sind jeweils erfindungswesentlich und können beliebig miteinander kombiniert werden.

## Patentansprüche

1. Einlageblatt, insbesondere für ein Identifikationsdokument, welches einen Faltbereich (31) aufweist, der zum Einbringen einer Naht (16) vorgesehen ist, und aus mindestens einer Schicht (24) aus einem thermoplastischen Elastomer und mit zumindest einer weiteren Schicht (26) besteht, bei der sich die zumindest eine weitere Schicht (26) in Richtung der Einlageblattebene im Wesentlichen von der der Naht (16) gegenüberliegenden Seite bis zum Faltbereich (31) und die zumindest eine Schicht (24) aus thermoplastischen Elastomer sich in den Faltbereich (31) erstreckt, **dadurch gekennzeichnet,**
- **dass** die zumindest eine Schicht (24) aus thermoplastischem Elastomer im Faltbereich (31) eine gleiche oder geringere Dicke als in übrigen Bereichen aufweist und
- **dass** die zumindest eine weitere Schicht (26) mit der zumindest einen Schicht (24) aus thermoplastischem Elastomer in übrigen Bereichen als im Faltbereich (31) eine größere Dicke umfasst und
- **dass** die zumindest eine weitere Schicht (26) zur zumindest einen Schicht (24) aus thermoplastischem Elastomer einen absatzfreien Übergangsbereich (41) zum Faltbereich (31) aufweist.

2. Einlageblatt nach Anspruch 1, **dadurch gekennzeichnet, dass** auf einer Seite der zumindest einen Schicht (24) aus thermoplastischem Elastomer mindestens zwei weitere Schichten (26, 28) angeordnet sind, die jeweils eine im Wesentlichen parallel zur Naht (16) verlaufende Nahtseitenkante (42) aufweisen, wobei die Nahtseitenkanten (42) der unmittelbar an die Schicht (24) aus thermoplastischem Elastomer angrenzenden ersten weiteren Schicht (28) sich weniger weit bis zum Faltbereich (31) erstrecken als die zumindest eine weitere Schicht (26).

3. Einlageblatt nach Anspruch 1 oder 2, **dadurch gekennzeichnet, dass** ein Übergangsbereich (41) zwischen einer Nahtseitenkante (42) der zumindest ersten weiteren Schicht (28) und der Nahtseitenkante (42) der weiteren Schicht (26) im Faltbereich (31) stufenförmig, gerundet, wellenförmig, segmentförmig mit gleichen oder unterschiedlichen Stufungen und/oder Verläufen ausgebildet ist.

4. Einlageblatt nach einem der vorhergehenden Ansprüche, **dadurch gekennzeichnet, dass** sich die zumindest eine weitere Schicht (26, 28) vollständig über den Faltbereich (31) erstreckt und auf der Schicht (24) aus thermoplastischem Elastomer aufliegt oder eingepresst ist, so dass der Faltbereich (31) gleich dick oder dünner als die Dicke der Schicht (24) ausgebildet ist.

5. Einlageblatt nach einem der vorhergehenden Ansprüche, **dadurch gekennzeichnet, dass** die mindestens eine Schicht (24) und/oder die zumindest eine weitere Schicht (26) im Faltbereich (31) eine Einprägung (51) oder Erhöhung aufweist.

6. Einlageblatt nach einem der vorhergehenden Ansprüche, **dadurch gekennzeichnet, dass** die zumindest eine weitere Schicht (26, 28) personalisiert ist.

7. Verfahren zur Herstellung eines Einlageblattes (17), insbesondere für ein buchartiges Identifikationsdokument (11), das aus mindestens einer Schicht (24) aus einem thermoplastischen Elastomer und mindestens einer weiteren Schicht (26, 28) besteht und einen Faltbereich (31) aufweist, der zum Anbringen einer Naht (16) bei der Fertigstellung des Identifikationsdokumentes (11) vorgesehen ist, **dadurch gekennzeichnet, dass** die zumindest eine weitere Schicht (26, 28) oberhalb und/oder unterhalb der zumindest einen Schicht (24) aus thermoplastischem Elastomer angeordnet wird und sich bis an oder in den Faltbereich (31) erstreckt und dass der in den Faltbereich (31) sich erstreckende Übergangsbereich (41) der zumindest einen weiteren Schicht (26) bündig zur Außenseite eines Faltbereiches (31) mit einer Laminierform (36) laminiert wird, so dass in übrigen Bereichen als im Faltbereich (31) eine größere Dicke des Einlageblattes (17) ausgebildet wird.

8. Verfahren nach Anspruch 7, **dadurch gekennzeichnet, dass** die zumindest eine erste und weitere Schicht (26, 28) oberhalb und unterhalb der zu der mindestens einen Schicht (24) aus thermoplastischem Elastomer vorgesehen sind und die erste weitere Schicht (28) sich bis zum Faltbereich (31) erstreckt und zumindest eine weitere zweite Schicht sich in den Faltbereich (31) erstreckt, um gemeinsam zur zumindest einen Schicht (24) aus thermoplastischem Elastomer geheftet zu werden, wobei die erste Schicht (28) auf der Schicht (24) aufliegt und die zumindest zweite weitere Schicht (26) in die mindestens eine Schicht (24) aufliegend oder eindringend verbunden wird.

9. Verfahren nach Anspruch 7 oder 8, **dadurch gekennzeichnet, dass** im Übergangsbereich (41) die Schichten (24, 28) miteinander verklebt, verschmolzen oder verschweißt werden.

10. Vorrichtung zum Herstellen eines Einlageblattes (17) nach Anspruch 7, **dadurch gekennzeichnet, dass** eine obere und eine untere Laminierform (36) vorgesehen ist, durch welche die zumindest eine Schicht (24) aus thermoplastischem Elastomer und mindestens eine weitere Schicht (26, 28) miteinander verbunden werden, und dass die obere und untere Laminierform (36) im Faltbereich (31) des Einlageblattes (17) einen Stempel (38) aufweist, der gegenüber der Laminierform (36) erhöht ist.

11. Vorrichtung nach Anspruch 10, **dadurch gekennzeichnet, dass** der Stempel (38) als Metall-, Kunststoff-, Keramikstreifen oder aus einem Streifen aus Verbundmaterial oder sitikonhaltigem Material ausgebildet ist.

12. Vorrichtung nach Anspruch 10 oder 11, **dadurch gekennzeichnet, dass** der Stempel an der Laminierform (36) durch Kleben, Löten, Schweißen, Heften, Krimpen, Nieten oder einer Magnethaltekraft vorgesehen oder durch ein Auftrag-oder Abtragverfahren, insbesondere galvanisches Verfahren oder eine spanabhebende Bearbeitung hergestellt ist.

13. Vorrichtung nach Anspruch 10 bis 12, **dadurch gekennzeichnet, dass** ein Querschnitt des Stempels (38) an die Querschnittsgeometrie des Faltbereiches (31) angepasst ist.

## Claims

1. Interleaf, in particular for an identity document, which comprises a fold area (31), which is provided for placing a seam (16) and comprises at least one layer (24) of a thermoplastic elastomer and with at least one further layer (26), in which the at least one further layer (26) extends in the direction of the interleaf plane substantially from the side opposite the seam (16) as far as the fold area (31), and the at least one layer (24) of thermoplastic elastomer extends into the fold area (31), **characterized in**
- **that** the at least one layer (24) of thermoplastic elastomer has a thickness in the fold area (31) equal to or less than in other regions and
- **that** the at least one further layer (26) with the at least one layer (24) of thermoplastic elastomer comprises a greater thickness in other regions than the fold area (31) and
- **that**, in relation to the at least one layer (24) of thermoplastic elastomer, the at least one further layer (26) has an interruption-free transition region (41) to the fold area (31).

2. Interleaf as claimed in claim 1, **characterized in that**, on one side of the at least one layer (24) of thermoplastic elastomer, there are arranged at least two further layers (26, 28), which each have a seam side edge (42) running substantially parallel to the seam (16), the seam side edges (42) of the first further layer (28), adjoining the layer (24) of thermoplastic elastomer directly, extending less far toward the fold area (31) than the at least one further layer (26).

3. Interleaf as claimed in claim 1 or 2, **characterized in that** a transition region (41) between a seam side edge (42) of the at least first further layer (28) and the seam side edge (42) of the further layer (26) in the fold area (31) is formed in the manner of a step, rounded, corrugated, in the manner of a segment with identical or different graduations and/or profiles.

4. Interleaf as claimed in one of the preceding claims, **characterized in that** the at least one further layer (26, 28) extends completely over the fold area (31) and rests on or is pressed into the layer (24) of thermoplastic elastomer, so that the fold area (31) is as thick or thinner than the thickness of the layer (24).

5. Interleaf as claimed in one of the preceding claims, **characterized in that** the at least one layer (24) and/or the at least one further layer (26) has an embossing (51) or elevation in the fold area (31).

6. Interleaf as claimed in one of the preceding claims, **characterized in that** the at least one further layer (26, 28) is personalized.

7. Process for the production of an interleaf (17), in particular for a book-like identity document (11), which comprises at least one layer (24) of a thermoplastic elastomer and at least one further layer (26, 28) and has a fold area (31) which is provided for the fitting of a seam (16) during the finishing of the identity document (11), **characterized in that** the at least one further layer (26, 28) is arranged above and/or below the at least one layer (24) of thermoplastic elastomer and extends as far as or into the fold area (31), and that the transition region (41) of the at least one further layer (26) which extends into the fold area (31) is laminated flush with the outer side of a fold area (31) with a laminating mold (36), so that a greater thickness of the interleaf (17) is formed in other regions than in the fold area (31).

8. Process as claimed in claim 7, **characterized in that** the at least one first and further layer (26, 28) are provided above and below the in relation to the at least one layer (24) of thermoplastic elastomer, and the first further layer (28) extends as far as the fold area (31) and at least one further second layer extends into the fold area (31), in order to be bound jointly with the at least one layer (24) of thermoplastic elastomer, in which the first layer (28) resting on the layer (24) and the at least second further layer (26) being joined into the at least one layer (24), lying on or penetrating into the latter.

9. Process as claimed in claim 7 or 8, **characterized in that**, in the transition region (41), the layers (24, 28) are adhesively bonded, fused or welded to one other.

10. Device for the production of an interleaf (17) as claimed in claim 7, **characterized in that**, a upper and lower laminating mold (36) is provided, by which the at least one layer (24) of thermoplastic elastomer and at least one further layer (26, 28) are joined to each other and that the upper and lower laminating mold (36) has a die (38) in the fold area (31) of the interleaf (17) which is elevated in relation to the laminating mold (36).

11. Device as claimed in claim 10, **characterized in that** the die (38) is formed from metal, plastic, ceramic strips or from a strip of composite material or silicone-containing material.

12. Device as claimed in claim 10 or 11, **characterized in that** the die is provided on the laminating mold (36) by means of adhesive bonding, soldering, welding, stapling, crimping, riveting or a magnetic holding force, or is produced by an application or removal process, in particular an electroplating process or material-removing machining.

13. Device as claimed in claims 10 to 12, **characterized in that** the cross section of the die (38) is matched to the cross-sectional geometry of the fold area (31).

## Revendications

1. Feuille intercalaire, en particulier pour un document d'identification, laquelle présente une zone de pliage (31) qui est prévue pour la réalisation d'une couture (16) et est composée d'au moins une couche (24) réalisée en un élastomère thermoplastique et d'au moins une autre couche (26), ladite au moins une autre couche (26) s'étendant en direction du plan de la feuille intercalaire, essentiellement depuis le côté opposé à la couture (16) jusqu'à la zone de pliage (31) et ladite au moins une couche (24) en élastomère thermoplastique s'étendant dans la zone de pliage (31), **caractérisée en ce que**
- ladite au moins une couche (24) en élastomère thermoplastique présente, dans la zone de pliage (31), une épaisseur égale ou inférieure à celle existant dans d'autres zones et
- ladite au moins une autre couche (26) comprend, avec ladite au moins une couche (24) en élastomère thermoplastique, une épaisseur qui est plus importante dans des zones autres que la zone de pliage (31), et
- ladite au moins une autre couche (26) présente, par rapport à ladite au moins une couche (24) en élastomère thermoplastique, une zone de transition (41) sans palier allant vers la zone de pliage (31).

2. Feuille intercalaire selon la revendication 1, **caractérisée en ce que** sur une face de ladite au moins une couche (24) en élastomère thermoplastique sont disposées au moins deux autres couches (26, 28) qui présentent respectivement un bord latéral de couture (42) s'étendant essentiellement parallèlement à la couture (16), les bords latéraux de couture (42) de la première autre couche (28) directement contiguë à la couche (24) en élastomère thermoplastique s'étendant moins loin par rapport à la zone de pliage (31) que ladite au moins une autre couche (26).

3. Feuille intercalaire selon la revendication 1 ou 2, **caractérisée en ce qu'**une zone de transition (41) située entre un bord latéral de couture (42) de ladite au moins une première autre couche (28) et le bord latéral de couture (42) de l'autre couche (26) est réalisée, dans la zone de pliage (31), de forme étagée, arrondie, ondulée, en forme de segments présentant des étagements et/ou des tracés identiques ou différents.

4. Feuille intercalaire selon l'une quelconque des revendications précédentes, **caractérisée en ce que** ladite au moins une autre couche (26, 28) s'étend entièrement au-dessus de la zone de pliage (31) et repose ou est pressée sur la couche (24) en élastomère thermoplastique de sorte que la zone de pliage (31) est réalisée de manière à avoir une épaisseur égale ou inférieure à celle de la couche (24).

5. Feuille intercalaire selon l'une quelconque des revendications précédentes, **caractérisée en ce que** ladite au moins une couche (24) et/ou ladite au moins une autre couche (26) présente, dans la zone de pliage (31), une empreinte (51) ou saillie.

6. Feuille intercalaire selon l'une quelconque des revendications précédentes, **caractérisée en ce que** ladite au moins une autre couche (26, 28) est personnalisée.

7. Procédé destiné à réaliser une feuille intercalaire (17), en particulier pour un document d'identification (11) de type livret, laquelle est composée d'au moins une couche (24) réalisée en un élastomère thermoplastique et d'au moins une autre couche (26, 28) et qui présente une zone de pliage (31) qui est prévue pour la réalisation d'une couture (16) lors de la finalisation du document d'identification (11), **caractérisé en ce que** ladite au moins une autre couche (26, 28) est disposée au-dessus et/ou en dessous de ladite au moins une couche (24) en élastomère thermoplastique et s'étend jusqu'à la zone de pliage (31) ou dans celle-ci, et **en ce que** la zone de transition (41) de ladite au moins une autre couche (26) s'étendant dans la zone de pliage (31) est laminée avec un moule de laminage (36) de manière à former une surface plane avec la face extérieure d'une zone de pliage (31) de sorte que la feuille intercalaire (17) est réalisée, dans des zones autres que la zone de pliage (31), avec une épaisseur supérieure.

8. Procédé selon la revendication 7, **caractérisé en ce que** ladite au moins une première et ladite au moins une autre couche (26, 28) sont prévues au-dessus et en dessous de ladite au moins une couche (24) en élastomère thermoplastique et que la première autre couche (28) s'étend jusqu'à la zone de pliage (31) et qu'au moins une autre deuxième couche s'étend dans la zone de pliage (31) afin d'être pointées ensemble par rapport à ladite au moins une couche (24) en élastomère thermoplastique, la première couche (28) reposant sur la couche (24) et ladite au moins une deuxième autre couche (26) étant assemblée à ladite au moins une couche (24) de manière à reposer sur celle-ci ou à pénétrer dans celle-ci.

9. Procédé selon la revendication 7 ou 8, **caractérisé en ce que** dans la zone de transition (41), les couches (24, 28) sont assemblées l'une à l'autre par collage, fusion ou soudage.

10. Dispositif destiné à réaliser une feuille intercalaire (17) selon la revendication 7, **caractérisé en ce qu'**il est prévu des moules de laminage (36), supérieur et inférieur, grâce auxquels ladite au moins une couche (24) en élastomère thermoplastique et au moins une autre couche (26, 28) sont assemblées entre elles, et **en ce que** les moules (36), supérieur et inférieur, présentent respectivement dans la zone de pliage (31) de la feuille intercalaire (17) un poinçon (38) qui fait saillie par rapport au moule de laminage (36).

11. Dispositif selon la revendication 10, **caractérisé en ce que** le poinçon (38) est réalisé sous forme de bande de métal, de matière plastique, de céramique ou à partir d'une bande en matériau composite ou en un matériau contenant du silicone.

12. Dispositif selon la revendication 10 ou 11, **caractérisé en ce que** le poinçon est prévu sur le moule de laminage (36) par collage, brasage, soudage, pointage, sertissage, rivetage ou par force de maintien magnétique ou est fabriqué par un procédé d'application ou d'érodage, en particulier un procédé de galvanisation ou un usinage par enlèvement de matière.

13. Dispositif selon l'une quelconque des revendications 10 à 12, **caractérisé en ce qu'**une section transversale du poinçon (38) est adaptée à la géométrie de section transversale de la zone de pliage (31).
